# FASCICULE DE BREVET EUROPEEN

(11) **EP 3 857 040 B1**
(45) Date de publication et mention de la délivrance du brevet: **26.10.2022**
(21) Numéro de dépôt: 19791317.1
(22) Date de dépôt: 19.09.2019
(51) Int. Cl.: F02C 7/36, F02C 7/06, F02K 3/06

(54) **TURBOMACHINE À RÉDUCTEUR POUR UN AÉRONEF**
FLUGZEUGTURBOMASCHINE MIT UNTERSETZUNGSGETRIEBE
AIRCRAFT TURBOMACHINE WITH REDUCTION GEARSET

(30) Priorité: 24.09.2018 FR 1858673
(43) Date de publication de la demande: 04.08.2021
(73) Titulaire: SAFRAN AIRCRAFT ENGINES, 75015 Paris (FR)
(72) Inventeur: VERDIER, Marion, Jeanne, Pierrette, 77550 MOISSY-CRAMAYEL (FR); BENSLAMA, Yanis, 77550 MOISSY-CRAMAYEL (FR); BRAULT, Michel, Gilbert, Roland, 77550 MOISSY-CRAMAYEL (FR); CUVILLIER, Romain, Guillaume, 77550 MOISSY-CRAMAYEL (FR); MORREALE, Serge, René, 77550 MOISSY-CRAMAYEL (FR)
(74) Mandataire: Gevers & Orès
(86) Numéro de dépôt international: PCT/FR2019/052193
(87) Numéro de publication internationale: WO 2020/065182

(56) Documents cités:
- EP-A1- 1 090 222
- EP-A1- 1 213 445
- EP-A2- 1 921 253
- EP-B1- 1 090 222
- EP-B1- 1 213 445
- WO-A1-2019/122740
- FR-A1- 3 075 863
- US-A1- 2008 022 653

## Description

### DOMAINE TECHNIQUE

La présente invention concerne une turbomachine à réducteur d'aéronef.

### ETAT DE L'ART

Une turbomachine, telle qu'un turboréacteur à double flux, comprend classiquement une entrée d'air comportant une soufflante carénée dont le flux d'air en sortie se divise en un flux d'air qui pénètre dans le moteur et forme un flux chaud (ou flux primaire), et en un flux d'air qui s'écoule autour du moteur et qui forme un flux froid (ou flux secondaire).

Le moteur comprend typiquement d'amont en aval, dans le sens d'écoulement des gaz, au moins un compresseur, une chambre de combustion, au moins une turbine, et une tuyère d'éjection dans laquelle les gaz de combustion sortant de la turbine (flux primaire) sont mélangés au flux secondaire. Une turbomachine peut également être du type à « double-corps » ce qui signifie qu'elle comporte deux rotors agencés coaxialement. Un premier corps est appelé corps basse pression et un second corps est appelé corps haute pression. De façon connue, le moteur comporte dans ce cas, d'amont en aval, un compresseur basse pression, un compresseur haute pression, la chambre de combustion, une turbine haute pression et une turbine basse pression.

Dans le cas d'une turbomachine à réducteur, l'arbre de turbine entraîne l'arbre de soufflante par l'intermédiaire d'un réducteur de vitesse qui est lubrifié et logé dans une enceinte annulaire de lubrification. Le réducteur permet de réduire la vitesse de rotation de l'arbre de soufflante par rapport à celle de l'arbre de turbine.

Selon le type de réducteur utilisé, planétaire ou épicycloïdal, l'arbre de soufflante va tourner dans le même sens ou dans le sens contraire à l'arbre de turbine. Un réducteur planétaire ou épicycloïdal présente chacun au moins un train épicycloïdal (comprenant au moins un solaire, un porte-satellites, des satellites et une couronne) agencé selon une configuration définie.

Plus précisément, un réducteur épicycloïdal présente notamment une couronne fixe et un porte-satellites solidaire de l'arbre de soufflante, chaque satellite ayant ainsi un axe de rotation mobile.

L'arbre de turbine, qui est l'arbre de turbine basse pression dans le cas d'une turbomachine à double corps, est en général accouplé à un arbre de compresseur basse pression qui est lui-même accouplé à un arbre d'entrée du réducteur. Cet arbre d'entrée est couplé en rotation avec un solaire du réducteur afin de l'entraîner en rotation.

L'arbre de soufflante est par exemple guidé en rotation par rapport à une structure fixe via deux paliers distants l'un de l'autre et placés en amont du réducteur de vitesse. L'arbre d'entrée est guidé en rotation par rapport à la structure fixe via un palier placé en aval du réducteur de vitesse.

Dans le cas d'un réducteur épicycloïdal, les désalignements au niveau des éléments internes du réducteur de vitesse (notamment le solaire et les satellites) sont fonction notamment des désalignements existants entre l'arbre de soufflante et l'arbre d'entrée.

De tels désalignements englobent les désalignements dits « statiques » correspondant aux désalignements issus de la cotation fonctionnelle des différentes pièces assemblées, les désalignements dits « quasi-statiques » correspondant aux désalignements engendrés sous chargement statique et les désalignements dits « dynamiques » correspondant aux désalignements engendrés sous chargement dynamique. Les motoristes cherchent à réduire au maximum ces désalignements, il n'en reste pas moins que ces derniers sont inévitables.

Afin de réduire les désalignements existants entre l'arbre de soufflante et l'arbre d'entrée, les motoristes choisissent traditionnellement d'introduire dans le système de transmission des moyens élastiquement déformables (par exemple au niveau de l'arbre d'entrée) et/ou des moyens d'accouplement présentant un débattement angulaire (par exemple des moyens d'accouplement à denture bombée communément appelés « cannelures bombées ») (par exemple au niveau de la liaison entre l'arbre d'entrée et le solaire).

Avec seulement des moyens élastiquement déformables dans le système de transmission, il est constaté que les désalignements entre l'arbre d'entrée et l'arbre de soufflante génèrent un engrènement non homogène entre les différents éléments internes du réducteur (et par conséquent des vibrations haute fréquence) à l'origine d'une usure prématurée par fatigue des éléments engrenés.

L'ajout dans le système de transmission de moyens d'accouplement à denture bombée au niveau de la liaison entre l'arbre d'entrée et le solaire permet certes d'améliorer l'homogénéité de l'engrènement mais impose aux moyens d'accouplement de travailler avec un angle de désalignement important, ce dernier étant à l'origine d'une usure prématurée de ces moyens d'accouplement.

L'art antérieur comprend notamment les documents EP-A2-1921253, US-A1-2008/022653, EP-A1-1090222, EP-A1-3276153 et EP-A1-1213445.

L'objectif de la présente invention est ainsi de proposer une turbomachine présentant une architecture optimisée permettant de remédier aux inconvénients précités.

### EXPOSE DE L'INVENTION

L'invention propose une turbomachine comprenant une unique soufflante carénée comportant un premier arbre annulaire portant des pales et entraîné en rotation par un second arbre annulaire via un réducteur de vitesse, ledit second arbre étant entraîné en rotation par un troisième arbre d'une turbine, lesdits premier, second et troisième arbres ayant un même axe de rotation X, ledit premier arbre étant guidé en rotation par rapport à une structure fixe via un premier palier et un second palier placés en amont dudit réducteur de vitesse, caractérisée en ce que le second arbre est guidé en rotation par rapport au premier arbre via un troisième palier à roulement placé en amont dudit réducteur de vitesse, ledit troisième palier à roulement comprenant une bague externe logée dans ledit premier arbre, une bague interne rapportée sur ledit second arbre et des éléments roulants disposés entre lesdites bagues interne et externe.

Ledit premier arbre peut être guidé en rotation directement par rapport à ladite structure fixe via ledit premier palier et ledit second palier placés en amont dudit réducteur de vitesse.

L'ajout d'un palier à roulement inter-arbres en amont du réducteur de vitesse permet de rigidifier une portion amont du second arbre (arbre d'entrée), et plus précisément la portion amont de l'arbre d'entrée accouplée avec le réducteur de vitesse. En effet, ce palier à roulement inter-arbres assure un guidage en rotation de la portion amont de l'arbre d'entrée par rapport à la structure fixe qui est structural via le premier arbre (arbre de soufflante) qui est quant à lui rigide du fait de son guidage par rapport à la structure fixe.

Ainsi, de manière générale, l'ajout de ce palier à roulement permet de minimiser les désalignements existants entre l'arbre de soufflante et la portion amont de l'arbre d'entrée. Et de manière plus précise, dans le cas d'un réducteur épicycloïdal, ce guidage supplémentaire par rapport à la structure fixe permet notamment d'atténuer significativement les désalignements présents au niveau de la liaison entre l'arbre d'entrée et le solaire ainsi qu'entre le solaire et les satellites, puisque d'une part la rigidité de la portion amont de l'arbre est accrue et d'autre part l'arbre de soufflante et le porte-satellites sont rigides.

La turbomachine selon l'invention peut comprendre une ou plusieurs des caractéristiques suivantes
- la turbomachine comprend des moyens d'étanchéité placés en amont dudit troisième palier et configurés pour assurer l'étanchéité entre ledit premier arbre et ledit second arbre ;
- lesdits moyens d'étanchéité comprennent un premier organe et un second organe, ledit premier organe comportant au moins une léchette annulaire en contact radial avec un anneau abradable dudit second organe ;
- le premier organe comprend une collerette rapportée sur ledit second arbre, ladite collerette étant disposée axialement entre des moyens de maintien axial et ladite bague interne ou un rebord pratiqué dans ledit second arbre ;
- le second organe comprend un collet placé dans un logement dudit premier arbre entre ladite bague externe et un épaulement pratiqué dans ledit logement ;
- ledit second arbre est guidé en rotation par rapport à la structure fixe via un quatrième palier ;
- ledit second arbre est couplé en rotation audit réducteur de vitesse via des premiers moyens d'accouplement, ledit second arbre étant couplé en rotation avec un quatrième arbre annulaire d'un compresseur via des seconds moyens d'accouplement disposés en aval dudit réducteur de vitesse, ledit quatrième arbre étant lui-même couplé en rotation avec ledit troisième arbre ;
- ledit second arbre comprend une portion interne et une portion externe centrées sur l'axe X, la portion interne et la portion externe étant couplées en rotation l'une à l'autre via des troisièmes moyens d'accouplement disposés en amont dudit troisième palier, ladite portion externe étant couplée en rotation audit réducteur de vitesse via les premier moyens d'accouplement, ladite bague interne étant rapportée sur ladite portion externe, ladite portion interne étant couplée en rotation avec le quatrième arbre via les seconds moyens d'accouplement ;
- lesdits troisièmes moyens d'accouplement présentent un débattement angulaire ;
- ledit second arbre comprend des moyens élastiquement déformables axialement disposés en aval dudit réducteur de vitesse ;
- lesdits moyens élastiquement déformables comprennent un premier dispositif élastiquement déformable et un second dispositif élastiquement déformable placés l'un à la suite de l'autre ;
- la turbomachine comprend un gicleur disposé en aval dudit réducteur de vitesse, ledit gicleur comportant une buse d'injection d'un lubrifiant liquide dans une cavité interne formée dans ledit second arbre, la turbomachine comprenant en outre des moyens d'acheminement dudit lubrifiant configurés pour acheminer ledit lubrifiant depuis ladite cavité jusqu'au troisième palier ;
- lesdits premier et second paliers comprennent chacun une bague interne liée audit premier arbre, une bague externe liée à ladite structure fixe et des éléments roulants entre lesdites bagues interne et externe.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique en coupe axiale d'une turbomachine à réducteur d'aéronef selon un premier mode de réalisation ;
- la figure 2 est une vue de détail de la figure 1 ;
- la figure 3 est une vue de détail en demi-coupe axiale d'un exemple concret du premier mode de réalisation ;
- la figure 4 est une vue de détail de la figure 3 ;
- la figure 5 est une vue de détail schématique en demi-coupe axiale d'une turbomachine à réducteur d'aéronef selon un second mode de réalisation ;
- la figure 6 est une vue de détail en demi-coupe axiale d'un premier exemple concret du second mode de réalisation ;
- la figure 7 est une vue de détail en demi-coupe axiale d'un second exemple concret du second mode de réalisation ;
- la figure 8 est une vue de détail des figures 6 et 7 ;
- la figure 9 correspond à la figure 4 sur laquelle est illustré l'acheminement du lubrifiant à l'intérieur d'une enceinte annulaire de la turbomachine ;
- la figure 10 correspond à la figure 8 sur laquelle est illustré l'acheminement du lubrifiant à l'intérieur d'une enceinte annulaire de la turbomachine ;
- la figure 11 illustre une étape de montage d'un procédé de montage de la turbomachine en référence à l'exemple concret du premier mode de réalisation illustré notamment sur les figures 3 et 4 ;
- la figure 12 illustre une étape de montage d'un procédé de montage de la turbomachine en référence aux exemples concrets du second mode de réalisation illustrés notamment sur les figures 6 à 8 ;
- la figure 13 est un graphique montrant le désalignement angulaire entre le solaire et un satellite du réducteur en fonction du régime du moteur de la turbomachine
- la figure 14 illustre des moyens d'accouplement entre une portion interne et une portion externe d'un arbre.

### DESCRIPTION DETAILLEE

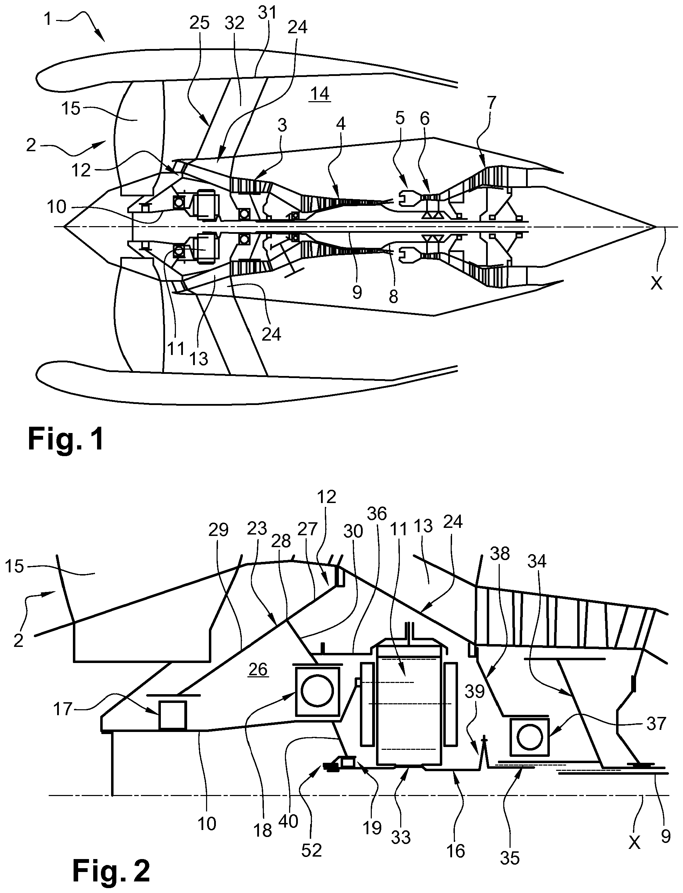

Sur la figure 1 est représentée une turbomachine 1 à réducteur, qui comprend classiquement d'amont en aval, dans le sens d'écoulement des gaz, une unique soufflante carénée 2 et un moteur comportant un compresseur basse pression 3, un compresseur haute pression 4, une chambre de combustion 5, une turbine haute pression 6 et une turbine basse pression 7. Les rotors du compresseur haute pression 4 et de la turbine haute pression 6 sont reliés par un arbre haute pression 8 et forment avec lui un corps haute pression (HP). Les rotors du compresseur basse pression 3 et de la turbine basse pression 7 sont reliés par un arbre basse pression 9 et forment avec lui un corps basse pression (BP). L'arbre 10 de la soufflante 2 est entraîné par l'intermédiaire d'un réducteur de vitesse 11 par l'arbre 9 de la turbine basse pression (BP) 7.

Par convention, dans la présente demande, les termes « amont » et « aval » sont définis par rapport au sens de circulation des gaz dans la turbomachine 1. On entend par « axial » ou « axialement » toute direction parallèle à l'axe X de la turbomachine, et par « radial » ou « radialement » toute direction perpendiculaire à l'axe X de la turbomachine. De même, par convention dans la présente demande, les termes « interne » et « externe », « intérieur » et « extérieur » sont définis radialement par rapport à l'axe X de la turbomachine 1, qui est notamment l'axe de rotation des arbres HP et BP 8, 9.

Le flux d'air généré par la soufflante 2 est divisé, par un bec de séparation d'une structure fixe 12 de la turbomachine 1, en un flux d'air primaire qui pénètre dans une veine primaire 13 du moteur et un flux d'air secondaire qui s'écoule autour du moteur dans une veine secondaire 14 et participe de manière prépondérante à la poussée fournie par la turbomachine 1.

La soufflante carénée 2 comporte un arbre de soufflante 10 (premier arbre) annulaire portant des pales 15 et entraîné en rotation par un arbre d'entrée 16 (second arbre) annulaire via un réducteur de vitesse 11. L'arbre d'entrée 16 est entraîné en rotation par l'arbre 9 de la turbine basse pression (BP) 7. L'arbre de soufflante 10, l'arbre d'entrée 16 et l'arbre de turbine BP 9 ont un même axe de rotation qui est coaxial avec l'axe X de la turbomachine 1.

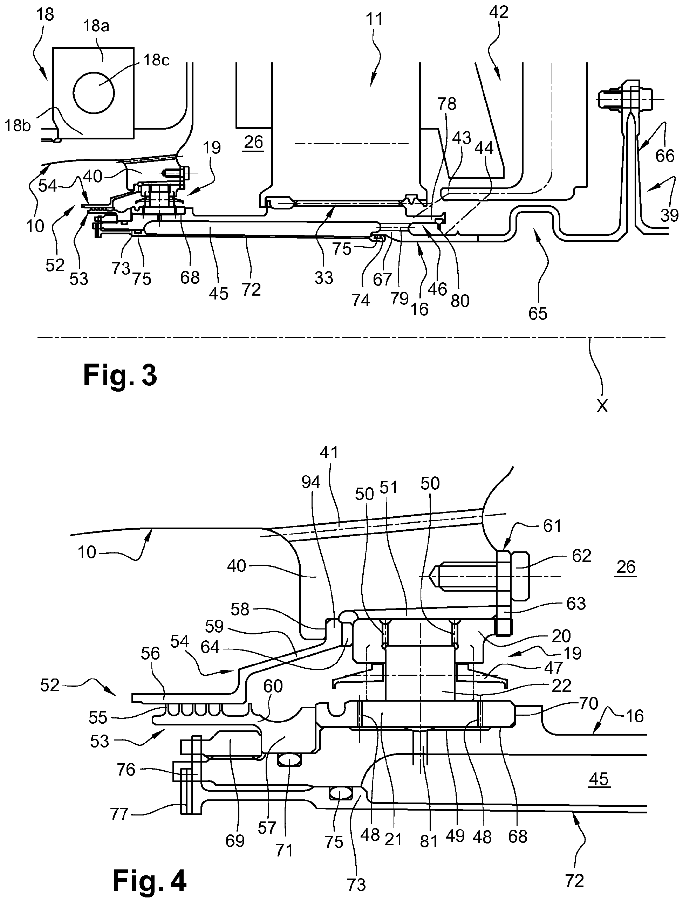

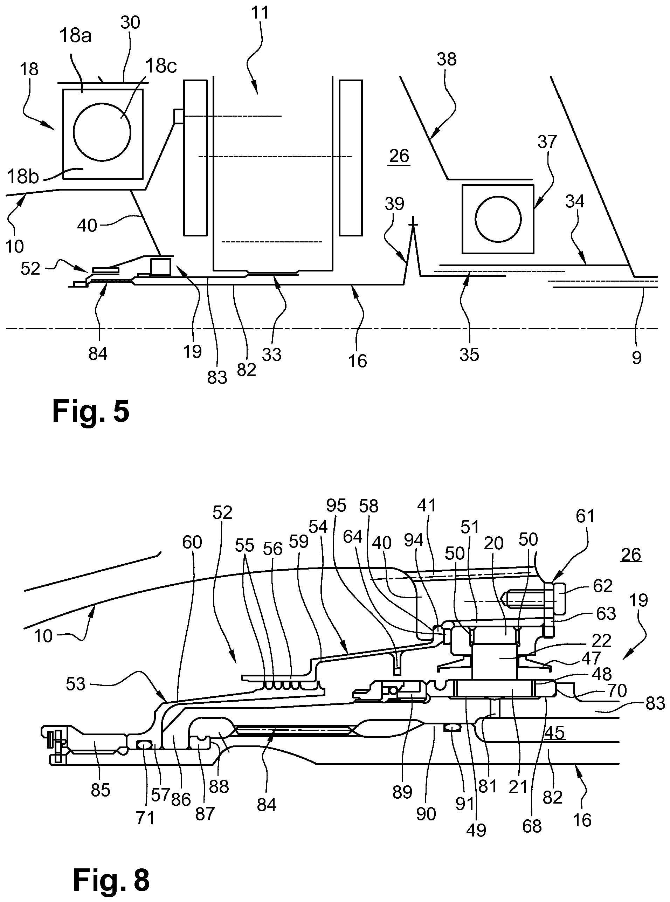

L'arbre de soufflante 10 est guidé en rotation, de préférence directement, par rapport à la structure fixe 12 de la turbomachine 1 via un premier palier 17 et un second palier 18 placés axialement en amont du réducteur 11. L'arbre d'entrée 16 est guidé en rotation par rapport à l'arbre de soufflante 10 via un troisième palier 19 à roulement placé axialement en amont du réducteur de vitesse 11. Le troisième palier 19 à roulement comprend une bague externe 20 logée dans l'arbre de soufflante 10, une bague interne 21 rapportée sur l'arbre d'entrée 16 et des éléments roulants 22 disposés entre les bagues interne et externe 20, 21 (figures 4 et 8).

Selon les modes de réalisation illustrés sur les figures, la soufflante 2 comprend un disque sur lequel sont montées les pales 15. Le disque est lié en rotation à l'arbre de soufflante 10.

L'arbre de soufflante 10 est guidé en rotation via les premier et second paliers 17, 18 par rapport à un support amont 23 annulaire rapporté sur un moyeu interne 24 d'un carter intermédiaire 25 de la structure fixe 12. Les premier et second paliers 17, 18 sont logés dans une enceinte 26 annulaire de lubrification communément appelée « enceinte huile ». Les premier et second paliers 17, 18 sont distants axialement l'un de l'autre. Le support amont 23 est annulaire et comprend une base 27 et une fourche 28 divisant la base 27 en une branche amont 29 et une branche aval 30.

Le premier palier 17 est un palier à roulement (centré sur l'axe X) comprenant une bague interne montée sur l'arbre de soufflante 10 et une bague externe logée dans la branche amont 29 du support amont 23. Les bagues interne et externe définissent une piste de roulement pour des éléments roulants (ici des rouleaux cylindriques). Le premier palier 17 est ainsi apte à supporter essentiellement des charges radiales.

Le second palier 18 est un palier à roulement (centré sur l'axe X) qui est axialement placé en aval du premier palier 17. Le second palier 18 comprend une bague interne 18a montée sur l'arbre de soufflante 10 et une bague externe 18b logée dans la branche aval 30 du support amont 23. Les bagues interne 18a et externe 18b définissent une piste de roulement pour des éléments roulants 18c (ici des billes). Les billes 18c sont en contact radial avec les bagues interne 18a et externe 18b. Le second palier 18 est ainsi apte à supporter des charges radiales et axiales.

Les premier et second paliers 17, 18 sont chacun lubrifiés à l'aide d'un lubrifiant liquide tel que de l'huile via un gicleur.

Le carter intermédiaire 25 comprend un moyeu interne 24 et une virole externe 31 s'étendant autour du moyeu 24, le moyeu interne 24 et la virole externe 31 étant reliés l'un à l'autre par des aubes de guidage 32 réparties de manière régulière autour de l'axe X. La virole 31 et le moyeu 24 forment une portion de la veine secondaire 14. Le moyeu interne 24 comprend un passage annulaire définissant une portion de la veine primaire 13. La portion de la veine secondaire 14 est séparée radialement de la portion de la veine primaire 13 par un compartiment inter-veine intégré dans la structure 12, le compartiment étant par exemple destiné au passage de servitudes.

Selon les modes de réalisation illustrés sur les figures, le réducteur 11 est ici de type épicycloïdal. Le réducteur 11 est logé et lubrifié dans l'enceinte 26 de lubrification. Le réducteur 11 permet de réduire la vitesse de rotation de l'arbre de soufflante 10 par rapport à celle de l'arbre de turbine BP 9. L'arbre d'entrée 16 est couplé en rotation à un solaire du réducteur 11 via des premiers moyens d'accouplement 33. L'arbre d'entrée 16 est couplé en rotation avec un arbre 34 du compresseur basse pression 3 (BP) (quatrième arbre) annulaire via des seconds moyens d'accouplement 35 disposés en aval du réducteur 11, l'arbre de compresseur BP 34 étant lui-même couplé en rotation avec l'arbre de turbine BP 9. Le réducteur 11 comprend en outre des satellites disposés chacun entre le solaire et une couronne fixe dans le cas d'un réducteur épicycloïdal 11. L'arbre de soufflante 10 est lié en rotation au porte-satellites du réducteur 11, le porte-satellites formant l'arbre de sortie du réducteur 11. La couronne est ici fixée au support amont 23 via une enveloppe 36 annulaire.

Les premiers moyens d'accouplement 33 sont des moyens d'accouplement présentant un débattement angulaire. Les premiers moyens d'accouplement 33 sont par exemple des moyens d'accouplement à denture bombée communément appelés « cannelures bombées » comportant des dents bombées (et autrement dit des dents présentant chacune en section axiale un profil bombé convexe) engagées dans des cannelures axiales. Les dents sont réalisées soit dans l'arbre d'entrée 16 soit dans le solaire.

Les seconds moyens d'accouplement 35 comprennent des cannelures axiales (ou rectilignes) pratiquées dans l'arbre d'entrée 16 et des cannelures axiales complémentaires pratiquées dans l'arbre de compresseur BP 34, les cannelures de l'arbre d'entrée 16 étant engagées dans les cannelures de l'arbre de compresseur BP 34.

Le réducteur 11 pourrait être de type planétaire. Dans un tel cas, le porte-satellites serait fixe et la couronne serait liée en rotation à l'arbre de soufflante 10, chaque satellite aurait ainsi un axe de rotation fixe.

L'arbre de compresseur BP 34 est guidé en rotation via un quatrième palier 37 par rapport à un support aval 38 annulaire rapporté sur le moyeu interne 24 du carter intermédiaire 25. Le quatrième palier 37 est logé dans l'enceinte 26. Le quatrième palier 37 est un palier à roulement (centré sur l'axe X) qui est axialement placé en aval du réducteur 11 et de moyens élastiquement déformables 39. Le quatrième palier 37 (centré sur l'axe X) comprend une bague interne montée sur l'arbre de compresseur BP 34 et une bague externe logée dans le support aval 38. Les bagues interne et externe définissent une piste de roulement pour des éléments roulants (ici des billes). Les billes sont en contact radial avec les bagues interne et externe. Le quatrième palier 37 est ainsi apte à supporter des charges radiales et axiales. Le quatrième palier 37 est lubrifié à l'aide d'un lubrifiant liquide tel que de l'huile via un gicleur.

L'enceinte 26 de lubrification est plus précisément délimitée par des éléments fixes et des éléments mobiles. Les éléments fixes délimitant l'enceinte 26 sont le support amont 23, le moyeu interne 24 et le support aval 38. Les éléments mobiles délimitant l'enceinte 26 sont l'arbre d'entrée 16 et l'arbre de soufflante 10 . Des moyens d'étanchéité (non représentés) sont prévus entre les éléments fixes et mobiles, les moyens d'étanchéité étant par exemple un ou plusieurs joints labyrinthe et/ou un ou plusieurs joints à brosse et/ou un ou plusieurs joints radiaux segmenté, etc. Les moyens d'étanchéité sont mis sous pression via un circuit d'air (non représenté) afin d'éviter les fuites de lubrifiant, l'air étant par exemple prélevé sur le compresseur BP ou HP de la turbomachine 1. Ce circuit d'air permet ainsi de ventiler et pressuriser l'enceinte 26.

Selon les modes de réalisation illustrés sur les figures, le troisième palier 19 à roulement est logé dans l'enceinte 26, et axialement disposé en aval du second palier 18 et en amont du réducteur 11. Préférentiellement, le diamètre extérieur du troisième palier 19 est inférieur au diamètre intérieur des premier et second paliers 17, 18 ainsi qu'au diamètre intérieur du quatrième palier 37. Le troisième palier 19 inter-arbres (centré sur l'axe X) comprend une bague interne 21 montée sur l'arbre d'entrée 16 et une bague externe 20 logée dans un logement cylindrique formé dans une collerette 40 de l'arbre de soufflante 10. Les bagues interne et externe 21, 20 définissent une piste de roulement pour des éléments roulants 22 (ici des rouleaux cylindriques 22). Le troisième palier 19 est ainsi apte à supporter essentiellement des charges radiales. La collerette 40 fait saillie radialement vers l'intérieur. La collerette 40 comprend des trous 41 axiaux destinés à récupérer d'éventuelles fuites de lubrifiant.

Tel qu'illustré sur les figures 3, 6 et 7, la turbomachine 1 comprend un gicleur 42 disposé en aval du réducteur 11, le gicleur 42 comportant une buse amont 43 d'injection de lubrifiant liquide (tel que de l'huile) destinée à lubrifier les premiers moyens d'accouplement 33. Le gicleur 42 comportant en outre une buse aval 44 d'injection de lubrifiant dans une cavité 45 interne formée dans l'arbre d'entrée 16. La turbomachine 1 comprend en outre des moyens d'acheminement 46 du lubrifiant configurés pour acheminer le lubrifiant depuis la cavité 45 jusqu'au troisième palier 19.

Tel qu'illustré sur les figures 4, 8 et 10, le troisième palier 19 comprend entre les bagues interne et externe 21, 20 des déflecteurs 47 configurés pour guider le lubrifiant depuis la bague interne 21 jusqu'à la bague externe 20 en passant par les éléments roulants 22.

La bague interne 21 comprend deux rangées annulaires, respectivement amont et aval, de canaux 48 de passage de lubrifiant. Ces canaux 48 sont sensiblement radiaux, leurs extrémités radialement externes débouchant sur la piste de roulement de la bague interne 21 et leurs extrémités radialement internes débouchant sur des entailles 49 axiales pratiquées dans l'arbre d'entrée 16, ces entailles 49 axiales étant réparties de manière régulière autour de l'axe X. Les canaux 48 et les entailles 49 permettent d'acheminer le lubrifiant depuis la cavité 45 annulaire formée dans l'arbre d'entrée 16 jusqu'à la piste de roulement.

De la même manière, la bague externe 20 comprend deux rangées annulaires, respectivement amont et aval, de canaux 50 de passage de lubrifiant. Ces canaux 50 sont sensiblement radiaux, leurs extrémités radialement internes débouchant sur la piste de roulement et leurs extrémités radialement externes débouchant sur des entailles 51 axiales pratiquées dans le logement de l'arbre de soufflante 10, ces entailles 51 axiales s'évasant de l'amont vers l'aval et étant réparties de manière régulière autour de l'axe X. Les canaux 50 et les entailles 51 permettent d'évacuer le lubrifiant depuis la piste de roulement jusqu'à une extrémité amont du logement.

Selon les modes de réalisation illustrés sur les figures, la turbomachine 1 comprend des moyens d'étanchéité 52 placés en amont du troisième palier 19, ces moyens d'étanchéité 52 étant configurés pour assurer l'étanchéité inter-arbres entre l'arbre de soufflante 10 et l'arbre d'entrée 16.

Plus précisément, les moyens d'étanchéité 52 comprennent un premier organe 53 et un second organe 54, le premier organe 53 comportant plusieurs léchettes 55 annulaires (ici cinq) en contact radial avec un anneau 56 abradable du second organe 54. Les léchettes 55 et l'anneau 56 forment ainsi un joint d'étanchéité de type labyrinthe. Le joint d'étanchéité est mis sous pression via un circuit d'air (non représenté) afin d'éviter les fuites de lubrifiant, l'air étant par exemple prélevé sur le compresseur BP ou HP de la turbomachine 1. Ce circuit d'air permet ainsi de ventiler et pressuriser l'enceinte 26. Le premier organe 53 comprend une collerette 57 rapportée sur l'arbre d'entrée 16. Le second organe 54 comprend un collet 94 placé dans le logement de l'arbre de soufflante 10 entre la bague externe 20 du troisième palier 19 et un épaulement 58 amont pratiqué dans le logement (figures 4 et 8). L'anneau 56 est relié au collet 94 via une paroi 59 inclinée annulaire. Les léchettes 55 sont reliées à la collerette 57 via un voile 60 incliné annulaire. Le collet 94 du second organe 54 et la bague externe 20 du troisième palier 19 sont arrêtés axialement via un chapeau 61 annulaire fixé de manière amovible sur la collerette 40 de l'arbre de soufflante 10 via une pluralité vis 62 réparties de manière régulière autour de l'axe X. Le chapeau 61 comporte plusieurs lumières 63 radialement au niveau des entailles 51 axiales de manière à permettre l'évacuation du lubrifiant dans l'enceinte 26. Une face aval du collet 94 du second organe 54 comprend des entailles 64 radiales de passage du lubrifiant, ces entailles 64 radiales communiquant avec les entailles 51 axiales.

Le fait d'avoir les moyens d'étanchéité 52 à proximité du troisième palier 19 permet minimiser les jeux de fonctionnement nécessaires, et par conséquent de contrôler avec précision l'étanchéité inter-arbres et la mise sous pression (ou quantité d'air qui pénètre dans l'enceinte 26).

Selon les modes de réalisation illustrés sur les figures, l'arbre d'entrée 16 comprend des moyens élastiquement déformables 39 axialement disposés en aval du réducteur 11, et plus précisément entre le réducteur 11 et les seconds moyens d'accouplement 35. Les moyens élastiquement déformables 39 sont par exemple un ou plusieurs soufflets 65 et/ou un ou plusieurs dispositifs d'accouplement flexible 66 connus sous la désignation anglaise « flex coupling » 66 et/ou un ou plusieurs dispositifs d'accouplement flexible par crabotage connus sous la désignation anglais « flex-curvic coupling».

Les soufflets 65 ou les dispositifs « flex coupling » 66 apportent une souplesse locale en rotation par rapport à un axe transverse à l'axe X de la turbomachine. Lorsque les soufflets 65 ou les dispositifs « flex coupling » 66 sont placés en série avec un écartement axial, les points locaux de souplesse en rotation permettent de créer en plus une souplesse radiale par rapport à un axe transverse à l'axe X de la turbomachine.

Plus précisément, un soufflet 65 correspond à une partie extensible élastiquement, cette partie étant généralement plissée en accordéon.

Un dispositif « flex coupling » 66 est un dispositif comportant deux parties d'arbre en L portant des brides serrées l'une contre l'autre au moyens de vis qui assurent la transmission du couple entre les deux parties d'arbre.

Un dispositif « flex-curvic coupling » est un dispositif « flex coupling » 66 auquel est ajouté un dispositif d'accouplement par crabotage au niveau des brides, afin de transmettre un couple plus important. Les dents sont par exemple de forme trapézoïdale.

On note que les moyens élastiquement déformables 39 permettent d'isoler le réducteur 11 en dissociant la portion amont et la portion aval de l'arbre d'entrée 16 (via l'intégration des moyens élastiquement déformables 39). Les moyens élastiquement déformables 39 confèrent de la souplesse à l'arbre d'entrée 16, et notamment à la portion aval de l'arbre d'entrée 16 (et donc aux seconds moyens d'accouplement 35).

Selon le mode de réalisation illustré sur les figures 1 à 4, l'arbre d'entrée 16 comprend une portion amont élargie délimitée axialement par un raccord 67. L'arbre d'entrée 16 comprend notamment, d'amont en aval, une portée 68 destinée à recevoir la bague interne 21 du troisième palier 19 (portion amont) et l'élément mâle ou femelle des premiers moyens d'accouplement 33 (portion amont), les moyens élastiquement déformables 39 et les cannelures axiales des seconds moyens d'accouplement 35.

Selon l'exemple concret du premier mode de réalisation illustré notamment sur la figure 3, les moyens élastiquement déformables 39 comprennent un soufflet 65 amont et un dispositif « flex coupling » 66 aval placés l'un à la suite de l'autre (ou en série).

Tel qu'illustré sur les figures 3 et 4, la collerette 57 du premier organe 53 est disposée axialement entre des moyens de maintien axial 69 (ici un écrou 69) et la bague interne 21 du troisième palier 19, la bague interne 21 du troisième palier 19 étant arrêtée axialement par un épaulement 70 aval. L'étanchéité entre le premier organe 53 et l'arbre d'entrée 16 est assurée via des moyens d'étanchéité 71 placés au niveau de la collerette 57 (ici un joint torique 71 logé dans une rainure annulaire circonférentielle pratiquée dans l'arbre d'entrée 16).

La cavité 45 interne est délimitée radialement par une surface interne de la portion amont de l'arbre d'entrée 16 et un fourreau 72 monté à l'intérieur de la portion amont de l'arbre d'entrée 16. Le fourreau 72 comprend une surépaisseur amont 73 et une surépaisseur aval 74 en contact radial avec la portion amont de l'arbre d'entrée 16. L'étanchéité entre le fourreau 72 et l'arbre d'entrée 16 est assurée via des moyens d'étanchéité 75 placés au niveau des surépaisseurs amont et aval 73, 74 (ici des joints toriques 75 logés dans des rainures annulaires circonférentielles pratiquées dans le fourreau 72). Le fourreau 72 comprend en outre un col 76 placé en amont des surépaisseurs amont et aval 73, 74. Le fourreau 72 est arrêté axialement par rapport à l'arbre d'entrée 16 par le raccord 67 disposé en aval de la surépaisseur aval 74 et un jonc d'arrêt 77 interne disposé en amont du col 76.

L'arbre d'entrée 16 comprend une patte 78 axiale en saillie de l'amont vers l'aval au niveau du raccord 67 formant une écope centrifuge de récupération du lubrifiant injecté par la buse aval 44 du gicleur 42. L'écope centrifuge communique avec la cavité 45 interne via une pluralité d'orifices 79 axiaux pratiqués dans le raccord 67 de l'arbre d'entrée 16. La patte 78 comprend à son extrémité aval un joint 80 muni d'une lèvre souple configurée pour maintenir un niveau de lubrifiant suffisant. L'arbre d'entrée 16 comprend une rangée annulaire de conduits 81 de passage de lubrifiant disposés axialement au niveau de la bague interne 21 du troisième palier 19, ces conduits 81 étant répartis de manière régulière autour de l'axe X. Ces conduits 81 sont sensiblement radiaux. Leurs extrémités radialement internes débouchent dans la cavité 45 et leurs extrémités radialement externes débouchent au niveau des entailles 49 axiales. La surépaisseur amont 73 est disposée en amont des conduits 81.

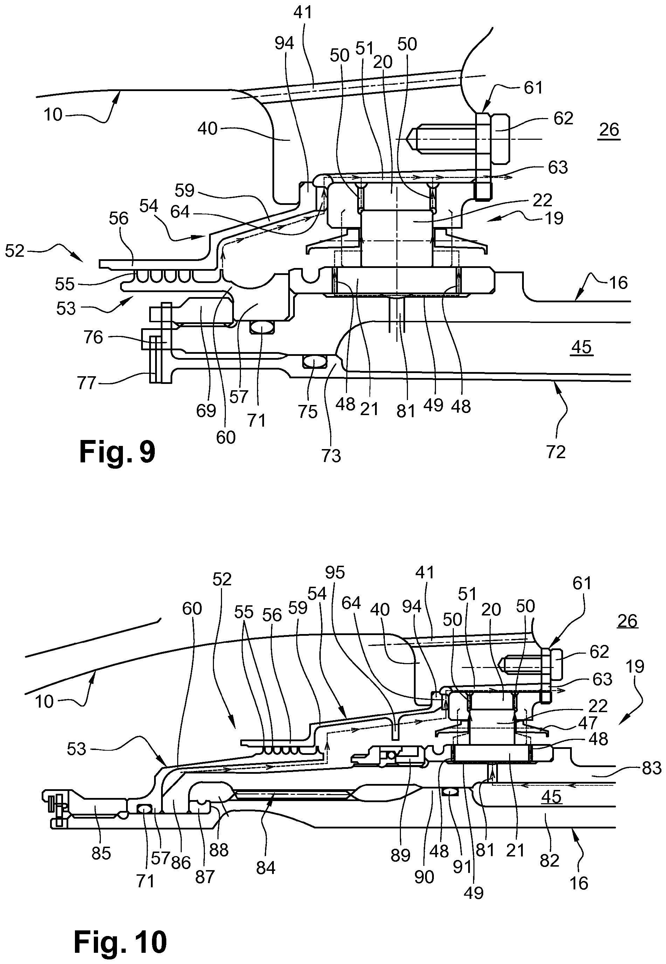

Tel qu'illustré sur les figures 3 et 9, sous l'effet centrifuge, le lubrifiant injecté dans l'écope est projeté vers l'extérieur, ce dernier s'écoulant depuis l'écope, axialement de l'aval vers l'amont et radialement de l'intérieur vers l'extérieur, jusqu'à la piste de roulement du troisième palier 19. Le lubrifiant s'écoule au moins successivement dans l'écope, les orifices 79 axiaux, la cavité 45 (plus précisément sur la surface interne de la portion amont de l'arbre d'entrée 16), les conduits 81, les entailles 49 axiales, et les canaux amont et aval 48.

Les léchettes 55 du premier organe 53 sont disposées en amont de la collerette 57.

De même, tel qu'illustré sur la figure 9, sous l'effet centrifuge, le lubrifiant présent en amont du troisième palier 19 est projeté vers l'extérieur, le lubrifiant s'écoulant depuis une extrémité amont de la paroi 59 du second organe 54, axialement de l'amont vers l'aval et radialement de l'intérieur vers l'extérieur, jusqu'aux lumières 63 du chapeau 61. Le lubrifiant s'écoule successivement sur (ou dans) la paroi 59 du second organe 54, les entailles 64 radiales, les entailles 51 axiales, et les lumières 63. Un tel circuit d'évacuation permet d'éviter que du lubrifiant ne soit emprisonné (ou stocké) en amont du troisième palier 19 et ne crée des balourds néfastes à l'équilibre dynamique de la soufflante 2.

Selon le second mode de réalisation illustré sur les figures 5 à 8, l'arbre d'entrée 16 comprend une portion interne 82 et une portion externe 83 centrées sur l'axe X. La portion interne 82 et la portion externe 83 sont couplées en rotation l'une à l'autre via des troisièmes moyens d'accouplement 84 disposés en amont du troisième palier 19 et du réducteur 11. La portion externe 83 est couplée en rotation au réducteur 11 via les premiers moyens d'accouplement 33. La bague interne 21 est rapportée sur une portée 68 de la portion externe 83. La portion interne 82 étant couplée en rotation avec l'arbre de compresseur BP 34 via les seconds moyens d'accouplement 35.

Le fait d'avoir les troisièmes moyens d'accouplement 84 en amont du réducteur 11 permet d'apporter une souplesse en flexion et en rotation supplémentaire.

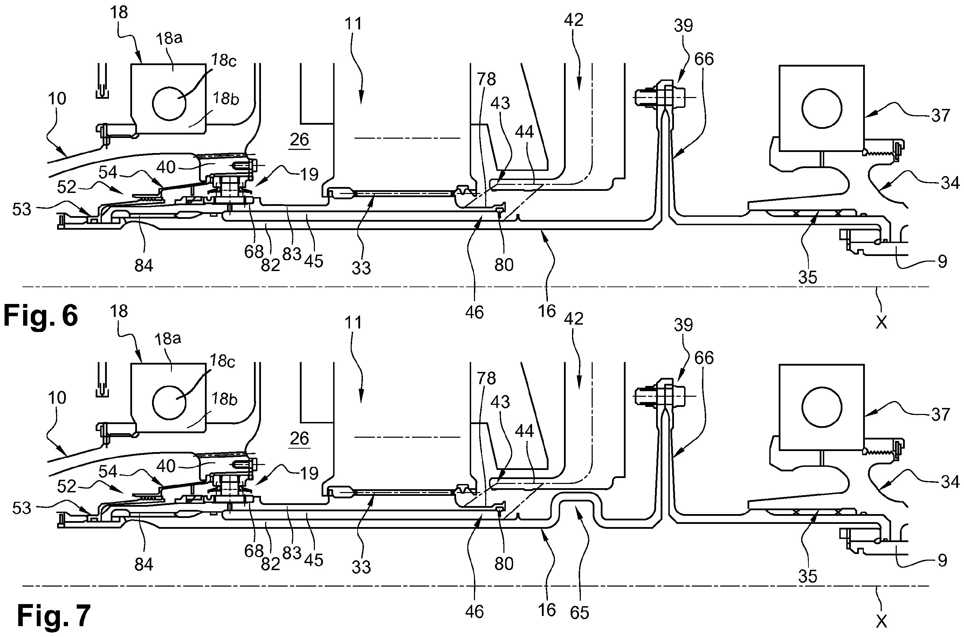

Selon le premier exemple concret du second mode de réalisation illustré sur la figure 6, les moyens élastiquement déformables 39 comprennent un dispositif « flex coupling » 66.

Selon le second exemple concret du second mode de réalisation illustré sur la figure 7, les moyens élastiquement déformables 39 comprennent un soufflet 65 amont et un dispositif « flex coupling » 66 aval placés l'un à la suite de l'autre (ou en série).

Selon le second mode de réalisation illustré sur les figures 5 à 8, les troisièmes moyens d'accouplement 84 sont par exemple des moyens d'accouplement à denture de type cannelures axiales. Les dents sont réalisées soit dans la portion interne 82 soit dans la portion externe 83.

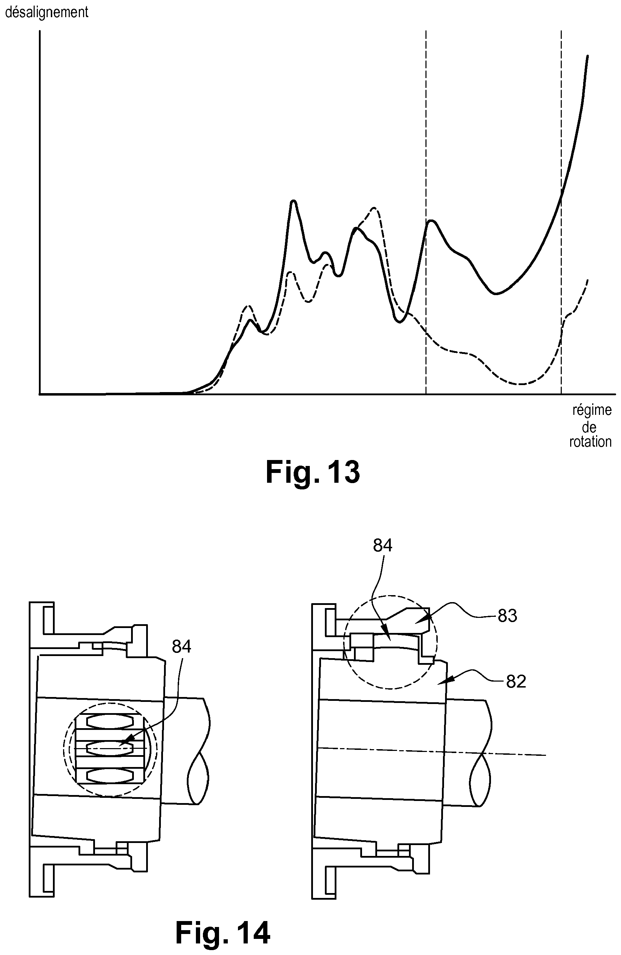

Selon une variante de réalisation illustrée sur la figure 14, les troisièmes moyens d'accouplement 84 présentent un débattement angulaire. Les troisièmes moyens d'accouplement 84 sont par exemple des moyens d'accouplement à denture bombée communément appelés « cannelures bombées » comportant des dents bombées (et autrement dit des dents présentant chacune en section axiale un profil bombé convexe) engagées dans des cannelures axiales. De telles cannelures bombées permettent notamment de récupérer du désalignement et de diminuer les contraintes à chaque extrémité des cannelures.

Les portions interne et externe 82, 83 de l'arbre d'entrée 16 forment ainsi une épingle, en demi-coupe axiale. Une telle configuration assure que les efforts internes et externes soient repris par le troisième palier 19 avant la transmission au réducteur 11.

La portion externe 83 comprend notamment, d'amont en aval, l'élément mâle ou femelle des troisièmes moyens d'accouplement 84, une portée 68 destinée à recevoir la bague interne 21 du troisième palier 19 et l'élément mâle ou femelle des premiers moyens d'accouplement 33. La portion interne 82 comprend notamment, d'amont en aval, l'élément mâle ou femelle des troisièmes moyens d'accouplement 84, les moyens élastiquement déformables 39 et les cannelures axiales des seconds moyens d'accouplement 35.

Selon les exemples concrets du second mode de réalisation illustré sur les figures 6 à 8, la collerette 57 du premier organe 53 est rapportée sur la portion interne 82 de l'arbre d'entrée 16. La collerette 57 est disposée axialement entre des moyens de maintien axial 85 (ici un écrou 85) et un rebord 86 de la portion externe 83 de l'arbre d'entrée 16, le rebord 86 définissant une extrémité amont de la portion externe 83 de l'arbre d'entrée 16. Le rebord 86 est disposé axialement entre la collerette 57 et une entretoise 87 annulaire rapportée sur la portion interne 82 de l'arbre d'entrée 16. L'entretoise 87 est disposée axialement entre le rebord 86 de la portion externe 83 de l'arbre d'entrée 16 et un épaulement 88 aval pratiqué dans la portion interne 82 de l'arbre d'entrée 16. Le serrage de l'écrou permet non seulement d'immobiliser le premier organe 53 mais également la portion externe 83 de l'arbre d'entrée 16 par rapport à la portion interne 82 de l'arbre d'entrée 16. L'étanchéité entre le premier organe 53 et la portion interne 82 de l'arbre d'entrée 16 est assurée via des moyens d'étanchéité 71 placés au niveau de la collerette 57 (ici un joint torique 71 logé dans une rainure annulaire circonférentielle pratiquée dans la portion interne 82 de l'arbre d'entrée 16).

La bague interne 21 du troisième palier 19 est arrêtée axialement par des moyens de maintien axial 89 (ici un écrou 89) amont et un épaulement 70 aval.

La cavité 45 interne est délimitée radialement par une surface interne de la portion externe 83 de l'arbre d'entrée 16 et une surface externe de la portion interne 82 de l'arbre d'entrée 16.

La portion externe 83 de l'arbre d'entrée 16 comprend une patte 78 axiale en saillie de l'amont vers l'aval, en aval des premiers moyens d'accouplement 33, formant une écope centrifuge de récupération du lubrifiant injecté par la buse aval 44 du gicleur 42. L'écope centrifuge communique avec la cavité 45 interne. La patte 78 comprend à son extrémité aval un joint 80 muni d'une lèvre souple configurée pour maintenir un niveau de lubrifiant suffisant. La portion externe 83 de l'arbre d'entrée 16 comprend une rangée annulaire de conduits 81 de passage de lubrifiant disposés axialement au niveau de la bague interne 21 du troisième palier 19, ces conduits 81 étant répartis de manière régulière autour de l'axe X. Ces conduits 81 sont sensiblement radiaux. Leurs extrémités radialement internes débouchent dans la cavité 45 et leurs extrémités radialement externes débouchent au niveau des entailles 49 axiales.

La portion interne 82 comprend un bourrelet 90 disposé en amont des conduits 81. L'étanchéité entre la portion interne 82 et la portion externe 83 de l'arbre d'entrée 16 est assurée via des moyens d'étanchéité 91 placés au niveau du bourrelet 90 (ici un joint torique 91 logé dans une rainure annulaire circonférentielle pratiquée dans la portion interne 82 de l'arbre d'entrée 16).

Tel qu'illustré sur les figures 6, 7 et 10, sous l'effet centrifuge, le lubrifiant injecté dans l'écope est projeté vers l'extérieur, ce dernier s'écoulant depuis l'écope, axialement de l'aval vers l'amont et radialement de l'intérieur vers l'extérieur, jusqu'à la piste de roulement du troisième palier 19. Le lubrifiant s'écoule au moins successivement dans l'écope, la cavité 45 (plus précisément sur la surface interne de la portion externe 83 de l'arbre d'entrée 16), les conduits 81, les entailles 49 axiales, et les canaux amont et aval 48.

Les léchettes 55 du premier organe 53 sont disposées en aval de la collerette 57. La paroi 59 du second organe 54 comprend une cloison interne présentant des ouvertures 95 de passage du lubrifiant.

De même, tel qu'illustré sur la figure 10, sous l'effet centrifuge, le lubrifiant présent en amont du troisième palier 19 est projeté vers l'extérieur, le lubrifiant s'écoulant depuis une extrémité amont du voile 60 du premier organe 53, axialement de l'amont vers l'aval et radialement de l'intérieur vers l'extérieur, jusqu'aux lumières 63 du chapeau 61. Le lubrifiant s'écoule successivement sur (ou dans) le voile 60 du premier organe 53, la paroi 59 du second organe 54, les ouvertures 95, les entailles 64 radiales, les entailles 51 axiales, et les lumières 63. Un tel circuit d'évacuation permet d'éviter que du lubrifiant ne soit emprisonné (ou stocké) en amont du troisième palier 19 et ne crée des balourds néfastes à l'équilibre dynamique de la soufflante 2.

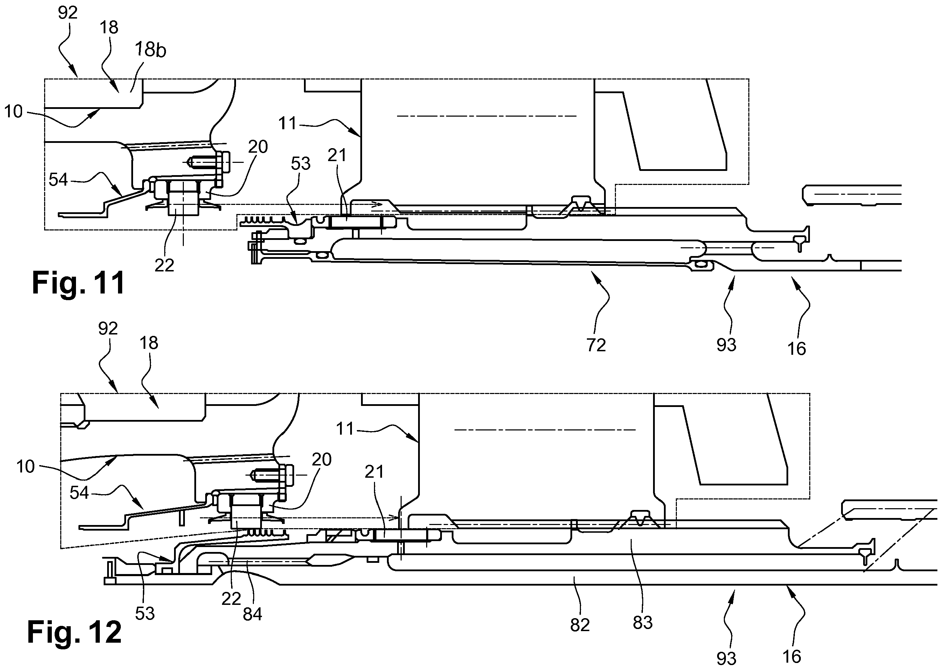

On se réfère maintenant à la figure 11 qui représente une étape de montage d'un procédé de montage de la turbomachine 1, et plus précisément de la turbomachine 1 présentée dans l'exemple concret du premier mode de réalisation.

Au cours de cette étape de montage, un premier sous-ensemble 92 (entouré en pointillés) est monté axialement de l'amont vers l'aval sur un second sous-ensemble 93.

Le premier sous-ensemble 92 comprend notamment l'arbre de soufflante 10, le réducteur 11, le second organe 54, la bague externe 20 et les éléments roulants 22 du troisième palier 19. Le second sous-ensemble 93 comprend notamment l'arbre d'entrée 16, le premier organe 53 et la bague interne 21 du troisième palier 19.

La figure 12 illustre la même étape de montage en référence aux exemples concrets du second mode de réalisation.

La figure 13 est un graphique illustrant le désalignement angulaire entre le solaire et un satellite du réducteur 11 (axe des ordonnées) en fonction du régime (ou vitesse de rotation) du moteur de la turbomachine 1 (et autrement dit la vitesse de rotation de l'arbre de turbine BP 9) (axe des abscisses). Des valeurs typiques d'amplitudes de désalignement sont situées entre 0.1 et 0.01 degrés. Le régime moteur est exprimé en tours par minute. La courbe en pointillés représente une architecture de l'art antérieur. La courbe en trait continu représente une architecture selon l'invention.

Par rapport à l'art antérieur, on constate une nette diminution du désalignement angulaire à partir d'un régime moteur supérieur à 6000 tours par minute qui correspond à la plage de fonctionnement stabilisé du moteur (entre les traits verticaux en pointillés) c'est à dire entre le ralenti au sol et le régime maximal en vol. A titre d'exemple, selon l'invention, à 8000 tours par minute, le désalignement angulaire mesuré est diminué d'un facteur supérieur à 2 par rapport à l'art antérieur.

Une telle diminution du désalignement angulaire permet notamment de réduire les vibrations hautes fréquences, et par conséquent d'accroître la durée de vie des éléments internes engrenés du réducteur 11.

## Revendications

1. Turbomachine (1) d'axe de rotation X comprenant une unique soufflante carénée (2) comportant un premier arbre (10) annulaire portant des pales (15) et entraîné en rotation par un second arbre (16) annulaire via un réducteur de vitesse (11), ledit second arbre (16) étant entraîné en rotation par un troisième arbre (9) d'une turbine (7), lesdits premier, second et troisième arbres (10, 16, 9) ayant un même axe de rotation (X), ledit premier arbre (10) étant guidé en rotation par rapport à une structure fixe (12) via un premier palier (17) et un second palier (18) placés en amont dudit réducteur de vitesse (11), **caractérisée en ce que** le second arbre (16) est guidé en rotation par rapport au premier arbre (10) via un troisième palier à roulement (19) placé en amont dudit réducteur de vitesse (11), ledit troisième palier à roulement (19) comprenant une bague externe (20) logée dans ledit premier arbre (10), une bague interne (21) rapportée sur ledit second arbre (16) et des éléments roulants (22) disposés entre lesdites bagues interne et externe (20, 21).

2. Turbomachine (1) selon la revendication 1, **caractérisée en ce que** la turbomachine (1) comprend des moyens d'étanchéité (52) placés en amont dudit troisième palier (19) et configurés pour assurer l'étanchéité entre ledit premier arbre (10) et ledit second arbre (16).

3. Turbomachine (1) selon la revendication 2, **caractérisée en ce que** lesdits moyens d'étanchéité (52) comprennent un premier organe (53) et un second organe (54), ledit premier organe (53) comportant au moins une léchette (55) annulaire en contact radial avec un anneau (56) abradable dudit second organe (54).

4. Turbomachine (1) selon la revendication 3, **caractérisée en ce que** le premier organe (53) comprend une collerette (57) rapportée sur ledit second arbre (16), ladite collerette (57) étant disposée axialement entre des moyens de maintien axial (69, 85) et ladite bague interne (21) ou un rebord (86) pratiqué dans ledit second arbre (16).

5. Turbomachine (1) selon l'une des revendications 3 ou 4, **caractérisée en ce que** le second organe (54) comprend un collet (94) placé dans un logement dudit premier arbre (10) entre ladite bague externe (20) et un épaulement (58) pratiqué dans ledit logement.

6. Turbomachine (1) selon l'une des revendications précédentes, **caractérisée en ce que** ledit second arbre (16) est couplé en rotation audit réducteur de vitesse (11) via des premiers moyens d'accouplement (33), ledit second arbre (16) étant couplé en rotation avec un quatrième arbre (34) annulaire d'un compresseur (3) via des seconds moyens d'accouplement (35) disposés en aval dudit réducteur de vitesse (11), ledit quatrième arbre (34) étant lui-même couplé en rotation avec ledit troisième arbre (9).

7. Turbomachine (1) selon la revendication 6, **caractérisée en ce que** ledit second arbre (16) comprend une portion interne (82) et une portion externe (83) centrées sur l'axe (X), la portion interne (82) et la portion externe (83) étant couplées en rotation l'une à l'autre via des troisièmes moyens d'accouplement (84) disposés en amont dudit troisième palier (19), ladite portion externe (83) étant couplée en rotation audit réducteur de vitesse (11) via les premier moyens d'accouplement (33), ladite bague interne (21) étant rapportée sur ladite portion externe (83), ladite portion interne (82) étant couplée en rotation avec le quatrième arbre (34) via les seconds moyens d'accouplement (35).

8. Turbomachine (1) selon la revendication 7, **caractérisée en ce que** lesdits troisièmes moyens d'accouplement (84) présentent un débattement angulaire.

9. Turbomachine (1) selon l'une des revendications précédentes, **caractérisée en ce que** ledit second arbre (16) comprend des moyens élastiquement déformables (39) axialement disposés en aval dudit réducteur de vitesse (11).

10. Turbomachine (1) selon la revendication 9, **caractérisée en ce que** lesdits moyens élastiquement déformables (39) comprennent un premier dispositif élastiquement déformable et un second dispositif élastiquement déformable placés l'un à la suite de l'autre.

11. Turbomachine (1) selon l'une des revendications précédentes, **caractérisée en ce qu'**elle comprend un gicleur (42) disposé en aval dudit réducteur de vitesse (11), ledit gicleur (42) comportant une buse (44) d'injection d'un lubrifiant liquide dans une cavité (45) interne formée dans ledit second arbre (16), la turbomachine (1) comprenant en outre des moyens d'acheminement (46) dudit lubrifiant configurés pour acheminer ledit lubrifiant depuis ladite cavité (45) jusqu'au troisième palier (19).

12. Turbomachine (1) selon l'une des revendications précédentes, **caractérisée en ce que** lesdits premier et second paliers (17, 18) comprennent chacun une bague interne (18a) liée audit premier arbre (10), une bague externe (18b) liée à ladite structure fixe (12) et des éléments roulants (18c) entre lesdites bagues interne (18a) et externe (18b).

## Patentansprüche

1. Turbomaschine (1) mit Drehachse X, umfassend ein einziges Mantelgebläse (2), das eine ringförmige erste Welle (10) umfasst, die Blätter (15) trägt und über ein Untersetzungsgetriebe (11) von einer ringförmigen zweiten Welle (16) in Drehung versetzt wird, wobei die zweite Welle (16) von einer dritten Welle (9) einer Turbine (7) in Drehung versetzt wird, wobei die erste, zweite und dritte Welle (10, 16, 9) eine selbe Drehachse (X) aufweisen, wobei die erste Welle (10) in Bezug auf eine feste Struktur (12) über ein erstes Lager (17) und ein zweites Lager (18), die stromaufwärts des Untersetzungsgetriebes (11) platziert sind, drehbar geführt wird, **dadurch gekennzeichnet, dass** die zweite Welle (16) in Bezug auf die erste Welle (10) über ein drittes Walzlager (19), das stromaufwärts des Untersetzungsgetriebes (11) platziert ist, drehbar geführt wird, wobei das dritte Walzlager (19) einen in der ersten Welle (10) aufgenommenen Außenring (20), einen an der zweiten Welle (16) angestückten Innenring (21) und zwischen dem Innen- und Außenring (20, 21) angeordnete Rollbauteile (22) umfasst.

2. Turbomaschine (1) nach Anspruch 1, **dadurch gekennzeichnet, dass** die Turbomaschine (1) Abdichtungsmittel (52) umfasst, die stromaufwärts des dritten Lagers (19) platziert sind und ausgelegt sind, um die Abdichtung zwischen der ersten Welle (10) und der zweiten Welle (16) sicherzustellen.

3. Turbomaschine (1) nach Anspruch 2, **dadurch gekennzeichnet, dass** die Abdichtungsmittel (52) ein erstes Element (53) und ein zweites Element (54) umfassen, wobei das erste Element (53) mindestens eine ringförmige Lasche (55) in radialem Kontakt mit einem abschleifbaren Ring (56) des zweiten Elements (54) umfasst.

4. Turbomaschine (1) nach Anspruch 3, **dadurch gekennzeichnet, dass** das erste Element (53) einen Kragen (57) umfasst, der an der zweiten Welle (16) angestückt ist, wobei der Kragen (57) axial zwischen Mitteln zum axialen Halten (69, 85) und dem Innenring (21) oder einem in der zweiten Welle (16) angefertigten Rand (86) angeordnet ist.

5. Turbomaschine (1) nach einem der Ansprüche 3 oder 4, **dadurch gekennzeichnet, dass** das zweite Element (54) eine Muffe (94) umfasst, die in einer Aufnahme der ersten Welle (10) zwischen dem Außenring (20) und einer in der Aufnahme gefertigten Schulter (58) platziert ist.

6. Turbomaschine (1) nach einem der vorstehenden Ansprüche, **dadurch gekennzeichnet, dass** die zweite Welle (16) über erste Kopplungsmittel (33) drehbar mit dem Untersetzungsgetriebe (11) gekoppelt ist, wobei die zweite Welle (16) über zweite Kopplungsmittel (35), die stromabwärts des Untersetzungsgetriebes (11) angeordnet sind, drehbar mit einer ringförmigen vierten Welle (34) eines Kompressors (3) gekoppelt ist, wobei die vierte Welle (34) selbst drehbar mit der dritten Welle (9) gekoppelt ist.

7. Turbomaschine (1) nach Anspruch 6, **dadurch gekennzeichnet, dass** die zweite Welle (16) einen inneren Abschnitt (82) und einen äußeren Abschnitt (83), die auf der Achse (X) zentriert sind, umfasst, wobei der innere Abschnitt (82) und der äußere Abschnitt (83) über dritte Kopplungsmittel (84), die stromaufwärts des dritten Lagers (19) angeordnet sind, drehbar aneinander gekoppelt sind, wobei der äußere Abschnitt (83) über die ersten Kopplungsmittel (33) drehbar mit dem Untersetzungsgetriebe (11) gekoppelt ist, wobei der Innenring (21) an dem äußeren Abschnitt (83) angestückt ist, wobei der innere Abschnitt (82) über die zweiten Kopplungsmittel (35) drehbar mit der vierten Welle (34) gekoppelt ist.

8. Turbomaschine (1) nach Anspruch 7, **dadurch gekennzeichnet, dass** die dritten Kopplungsmittel (84) einen winkligen Ausschlag aufweisen.

9. Turbomaschine (1) nach einem der vorstehenden Ansprüche, **dadurch gekennzeichnet, dass** die zweite Welle (16) elastisch verformbare Mittel (39) umfasst, die axial stromabwärts des Untersetzungsgetriebes (11) angeordnet sind.

10. Turbomaschine (1) nach Anspruch 9, **dadurch gekennzeichnet, dass** die elastisch verformbaren Mittel (39) eine erste elastisch verformbare Vorrichtung und eine zweite elastisch verformbare Vorrichtung, die nacheinander platziert sind, umfassen.

11. Turbomaschine (1) nach einem der vorstehenden Ansprüche, **dadurch gekennzeichnet, dass** sie eine stromabwärts des Untersetzungsgetriebes (11) angeordnete Vergaserdüse (42) umfasst, wobei die Vergaserdüse (42) eine Düse (44) zum Einspritzen eines flüssigen Schmiermittels in einen inneren Hohlraum (45), der von der zweiten Welle (16) gebildet wird, umfasst, wobei die Turbomaschine (1) weiter Transportmittel (46) des Schmiermittels umfasst, die ausgelegt sind, um das Schmiermittel ausgehend von dem Hohlraum (45) bis zum dritten Lager (19) zu transportieren.

12. Turbomaschine (1) nach einem der vorstehenden Ansprüche, **dadurch gekennzeichnet, dass** das erste und zweite Lager (17, 18) jeweils einen Innenring (18a), der mit der ersten Welle (10) verbunden ist, einen Außenring (18b), der mit der festen Struktur (12) verbunden ist, und Rollbauteile (18c) zwischen dem Innen- (18a) und dem Außenring (18b) umfassen.

## Claims

1. A turbomachine (1) with an axis of rotation X comprising a single ducted fan (2) comprising a first annular shaft (10) carrying blades (15) and driven in rotation by a second annular shaft (16) via a speed reducer (11), said second shaft (16) being driven in rotation by a third shaft (9) of a turbine (7), said first, second and third shafts (10, 16, 9) having a same axis of rotation (X), said first shaft (10) being guided in rotation with respect to a fixed structure (12) via a first bearing (17) and a second bearing (18) located upstream of said speed reducer (11), **characterised in that** the second shaft (16) is guided in rotation with respect to the first shaft (10) via a third rolling bearing (19) located upstream of said speed reducer (11), said third rolling bearing (19) comprising an outer ring (20) housed in said first shaft (10), an inner ring (21) attached to said second shaft (16) and rolling elements (22) disposed between said inner and outer rings (20, 21).

2. The turbomachine (1) according to claim 1, **characterised in that** the turbomachine (1) comprises sealing means (52) located upstream of said third bearing (19) and configured to ensure tightness between said first shaft (10) and said second shaft (16).

3. The turbomachine (1) according to claim 2, **characterised in that** said sealing means (52) comprise a first member (53) and a second member (54), said first member (53) comprising at least one annular lip (55) in radial contact with an abradable ring (56) of said second member (54).

4. The turbomachine (1) according to claim 3, **characterised in that** the first member (53) comprises a collar (57) attached to said second shaft (16), said collar (57) being disposed axially between axial holding means (69, 85) and said inner ring (21) or a ledge (86) made in said second shaft (16).

5. The turbomachine (1) according to one of claims 3 or 4, **characterised in that** the second member (54) comprises a flange (94) located in a housing of said first shaft (10) between said outer ring (20) and a shoulder (58) made in said housing.

6. The turbomachine (1) according to one of the preceding claims, **characterised in that** said second shaft (16) is rotationally coupled to said speed reducer (11) via first coupling means (33), said second shaft (16) being rotationally coupled to a fourth annular shaft (34) of a compressor (3) via second coupling means (35) disposed downstream of said speed reducer (11), said fourth shaft (34) being in turn rotationally coupled to said third shaft (9).

7. The turbomachine (1) according to claim 6, **characterised in that** said second shaft (16) comprises an inner portion (82) and an outer portion (83) centred on the axis (X), the inner portion (82) and the outer portion (83) being rotationally coupled to each other via third coupling means (84) disposed upstream of said third bearing (19), said outer portion (83) being rotationally coupled to said speed reducer (11) via the first coupling means (33), said inner ring (21) being attached to said outer portion (83), said inner portion (82) being rotationally coupled to the fourth shaft (34) via the second coupling means (35).

8. The turbomachine (1) according to claim 7, **characterised in that** said third coupling means (84) have an angular deflection.

9. The turbomachine (1) according to one of the preceding claims, **characterised in that** said second shaft (16) comprises elastically deformable means (39) axially disposed downstream of said speed reducer (11).

10. The turbomachine (1) according to claim 9, **characterised in that** said elastically deformable means (39) comprise a first elastically deformable device and a second elastically deformable device located one after the other.

11. The turbomachine (1) according to one of the preceding claims, **characterised in that** it comprises a nozzle (42) disposed downstream of said speed reducer (11), said nozzle (42) comprising an outlet (44) for injecting a liquid lubricant into an internal cavity (45) formed in said second shaft (16), the turbomachine (1) further comprising conveying means (46) of said lubricant configured to convey said lubricant from said cavity (45) to the third bearing (19).

12. The turbomachine (1) according to one of the preceding claims, **characterised in that** said first and second bearings (17, 18) each comprise an inner ring (18a) connected to said first shaft (10), an outer ring (18b) connected to said fixed structure (12) and rolling elements (18c) between said inner (18a) and outer (18b) rings.
